# EUROPÄISCHE PATENTANMELDUNG

(11) **EP 1 281 981 A2**
(43) Veröffentlichungstag der Anmeldung: **05.02.2003**
(21) Anmeldenummer: 02100782.8
(22) Anmeldetag: 04.07.2002
(51) Int. Cl.: G01S 3/80, H04R 3/00

(54) **Richtungssensitives Audioaufnahmesystem mit Anzeige von Aufnahmegebiet und/oder Störquelle**

(30) Priorität: 07.07.2001 DE 10133126
(71) Anmelder: Philips Corporate Intellectual Property GmbH, 20099 Hamburg (DE); Koninklijke Philips Electronics N.V., 5621 BA Eindhoven (NL)
(72) Erfinder: Stahl, Volker, Weisshausstrasse 2, 52066 Aachen (DE); Fischer, Alexander, Weishausstrasse 2, 52066 Aachen (DE)
(74) Vertreter: Volmer, Georg, Dipl.-Ing.

(57) **Zusammenfassung**

Die Erfindung bezieht sich auf ein richtungssensitives Audioaufnahmesystem mit einer Systemkomponente
- zur Anzeige eines Aufnahmegebietes des Systems und/oder
- zur Anzeige einer Störquelle.

In einer bevorzugten Ausführungsform dient eine künstliche Kreatur oder ein Teil einer künstlichen Kreatur zur Anzeige des Aufnahmegebietes und/oder der Störquelle. Es eignen sich z B. ein stilisierter menschlicher Kopf oder eine hundähnliche Gestalt.

Besondere Bedeutung besitzt ein erfindungsgemäßes Audioaufnahmesystem als Bestandteil eines Spracherkennungssystems, das beispielsweise als Benutzerschnittstelle zur Steuerung von Geräten eingesetzt werden kann.

## Beschreibung

Die Erfindung bezieht sich auf ein richtungssensitives Audioaufnahmesystem und insbesondere auf ein Spracherkennungssystem, das ein solches richtungssensitives Audioaufnahmesystem zum Aufnehmen von Sprachbefehlen einsetzt. Solche Spracherkennungssysteme können z. B. vorteilhaft als Benutzerschnittstelle zur Steuerung von Geräten eingesetzt werden.

Richtungssensitivität lässt sich in einem Audioaufnahmesystem z. B. durch Verwendung eines Richtmikrofons oder auch durch Verwendung eines Mikrofon-Arrays mit entsprechender Signalverarbeitung erreichen. Dabei besteht der Sinn einer Richtcharakteristik darin, die aus dem Aufnahmegebiet des richtungssensitiven Audioaufnahmesystems kommenden Audiosignale gegsnüber allen übrigen Audiosignalen anzuheben. Gegenüber einem Mikrofon mit Rundumcharakteristik werden also die aus dem Aufnahmegsbiet stammenden Nutzsignale verstärkt und/oder die von außerhalb des Aufnahmegebietes herrührenden Störsignale geschwächt, womit sich der Signal-zu-Rausch-Abstand des Audioaufnahmesystems verbessert. Insbesondere die in Anlehnung an den englischen Sprachgebrauch als Mikrofon-Arrays bezeichneten Anordnungen mehrerer Mikrofone bieten große Signalverbesserungen gegenüber einem Einzelmikrofon.

Die nicht aus dem Aufnahmegsbiet kommenden Störsignale können dabei einerseits von Signalquellen kommen, die sich außerhalb des Aufnahmegebietes befinden. Sie können jedoch auch von der Nutzsignalquelle selbst herrühren, wenn deren Audiosignale durch Mehrwegeausbreitung wie z. B. nach Reflektionen an Raumwänden mehrfach mit entsprechenden Phasenverschiebungen an den Mikrofonen des Audioaufnahmesystems eintreffen. Zwar können so genannte Equalizer auch solche phasenverschoben eintreffenden Signale i. d R. noch nutzbringend einsetzen, sofern die Größe der Phasenverschiebung im Arbeitsbereich des Equalizers liegt.

Sind die Wegedifferenzen und damit die Phasenverschiebungen der über Mehrwegeausbreitung eintreffenden Audiosignale jedoch zu groß oder verfügt das Audioaufnahmesystem über keinen Equalizer, so wirken die verspätet eintreffenden Audiosignale der Nutzsignalquelle als Störsignale. Erfolgt die vor ihrem Empfang letzte Ablenkung dieser verspätet eintreffenden Audiosignale aber an einem Punkt, z. B. einer Raumwand, die nicht im Aufnahmegebiet des Audioaufnahmesystems liegt, so wirkt die Richtcharakteristik des Audioaufnahmesystems auch auf sie. Dieser letzte Ablenkungspunkt erscheint nämlich für das Audioaufnahmesystem als scheinbare Quelle der störenden Audiosignale und damit als Störquelle. In diesem Sinne können Audioaufnahmesysteme mit Richtcharakteristik also auch die sich durch Mehrwegeausbreitung ergebenden Probleme, die auch als Nachhall oder im Englischen als Reverberation bekannt sind, vermindern.

Ist der direkte Ausbreitungsweg von Nutzquelle zu den Mikrofonen des Audioaufnahmesystems z. B. durch ein Hindernis blockiert, so erscheint dem Audioaufnahmesystem der letzte Ablenkungspunkt des Ausbreitungsweges als scheinbare Nutzquelle, auf dem das stärkste der über die verschiedenen Ausbreitungswege zu ihm gelangenden Nutzsignale eintrifft. I. d R. wird ein Audioaufnahmesystem diese scheinbaren Quellen als die tatsächlichen Signalquellen ansehen. Prinzipiell könnte ein entsprechend ausgestattetes System jedoch bei Kenntnis der Ausbreitungsbedingungen auch die Ausbreitungswege zurückverfolgen und so die tatsächlichen Standorte der Audioquellen herausfinden.

Das Aufnahmegsbiet eines richtungssensitiven Audioaufnahmesystems kann, z. B. bei Verwendung eines linearen Mikrofon-Arrays, eine bestimmte Raumrichtung sein, die auch als Strahl oder in Anlehnung an den englischen Sprachgebrauch als "beam" bezeichnet wird Durch andere, z. B. in einer Ebene liegende Mikrofonanordnungen, lassen sich jedoch auch anders geformte Aufnahmegebiete erzeugen. Insbesondere kann durch dreidimensionale Anordnungen das Aufnahmegebiet auch auf einen bestimmten engeren Raumbereich eingeschränkt werden, wodurch sich große Signalverbesserungen ergeben.

Da bei den Mikrofon-Arrays das Aufnahmegebiet durch die nachfolgende Signalverarbeitung beeinflusst werden kann, lassen sich Form und Lage des Aufnahmegebietes bei diesen Systemen in besonders flexibler Weise adaptiv gestalten. Darüber hinaus kann das Aufnahmegebiet natürlich auch noch durch mechanische Bewegung des Mikrofons bzw. der Mikrofone beeinflusst werden. Auf der anderen Seite lässt sich eine solche Steuerung des Aufnahmegebietes auch dazu einsetzen, eine Signalquelle zu lokalisieren, d. h. je nach Systemausgsstaltung die Richtung oder auch der engere Raumbereich bestimmen, wo sich die Signalquelle befindet. Das Aufnahmegebiet kann einer sich bewegenden Signalquelle auch nachgeführt werden, um während der gesamten Audioaufnahme einen möglichst optimalen Signal-zu-Rausch-Abstand zu erhalten.

Daher haben richtungssensitive Audioaufnahmesysteme eine Vielzahl von Anwendungen gefunden. Z. B. sorgen sie für eine hohe Aufnahmegüte bei Nachrichtensprechern und Rednern, oder sie dienen zur Aufnahme und zum gleichzeitigen "tracking", d. h der Verfolgung, des momentanen Sprechers bei einer Audio- oder Videokonferenz. Bei letzterem, d h. der Videokonferenz, können die "tracking"-Signale zur gleichzeitigen Steuerung des Aufnahmegebietes der Videokamera/Videokameras eingesetzt werden. Auch lassen sich die Videosignale nach entsprechender Musterverarbeitung ebenfalls zum "tracking" des Sprechers heranziehen.

Von besonderer Bedeutung ist der Einsatz richtungssensitiver Audioaufnahmesysteme zum Aufnehmen von Sprachbefehlen für Spracherkennungssysteme. Es ist bekannt, dass sich die Erkennungsgenauigkeit eines Spracherkennungssystems bei abnehmendem Signal-zu-Rausch-Abstand erheblich verschlechtert. Daher sind hochwertige Aufnahmesysteme, wie sie z. B. von richtungssensitiven Audioaufnahmesystemen dargsstellt werden, für Spracherkennungssysteme von besonderer Bedeutung

So beschreibt die WO 01/29823 A1 ein natürlich-sprachliches Benutzer-Interface zur Gerätesteuerung (natural language interface control system for operating a plurality of devices), das sprachliche Äußerungen eines Benutzers mit einem Mikrofon-Array (microphone array) aufnimmt, um sie dann einem Spracherkennungssystem (bestehend aus Merkmalsextraktion und eigentlicher Spracherkennung: feature extraction module and speech recognition module) und weiteren Verarbeitungsstufen (natural language interface module) zuzuführen. In dieser Verarbeitungskette werden die natürlich-sprachlichen Äußeungen des Benutzers schließlich in Kommandos umgesetzt, die dann die über eine Gerätechnittstelle (device interface) angeschlossenen Geräte steuern.

Wie bereits gesagt besteht die Funktion eines richtungssensitiven Audioaufnahmesystems darin, die Audioquelle/Audioquellen in ihrem Aufnahmegebiet zu verstärken und/oder die außerhalb ihres Aufnahmegebietes abzuschwächen, um auf diese Weise einen gegenüber einem Mikrofon mit Rundumcharakteristik verbesserten Signal-zu-Rausch-Abstand zu eralten. Daher ist es bei einem richtungssensitiven Audioaufnahmesystem von essentieller Bedeutung, dass sich eine aufzunehmende Audioquelle wirklich im Aufnahmegebiet des Systems befindet. Anderenfalls kann der Signal-zu-Rausch-Abstand so schlecht werden, dass die Audioaufnahme unbrauchbar wird Dies ist insbesondere dann der Fall, wenn das richtungssensitive Audioaufnahmesystem ein Spracherkennungssystem speist.

Um nun tatsächlich auf eine gewünschte Audioquelle zu fokussieren, können richtungssensitive Audioaufnahmesysteme wie bereits erwähnt mit einer Verfolgungsfunktion ausgestattet werden. Insbesondere kann die Richtcharakteristik des Systems selbst benutzt werden, oder es werden zusätzliche Informationsquellen wie z. B. Videokameras herangezogen. Dennoch kann nicht ausgeschlossen werden, dass die gewünschte Audioquelle sich nicht im Aufnahmegebiet des richtungssensitiven Audioaufnahmesystems befindet.

Z. B. ist folgende Situation denkbar: Eine Person möchte einen Videorekorder mittels eines in der WO 01/29823 A1 beschriebenen natürlich-sprachlichen Benutzer-Interfaces bedienen. In demselben Raum wie diese Person befinden sich jedoch noch zwei weitere Personen, die sich miteinander unterhalten. Das Audioaufnahmesystem kann sich dann irrtümlich auf diese beiden weiteren Personen fokussieren, was dazu führt, dass die Kommandos der ersten Person vom Audioaufnahmesystem gedämpft werden, während das Gespräch der beiden weiteren Personen verstärkt wird. Das nachgeschaltete Spracherkennungssystem "hört" dann hauptsächlich nur das Gespräch der beiden weiteren Personen, denen es gar keine Kommandos oder sogar irrtümlich verstandene Kommandos entnimmt. Die erste Person hat in dieser Situation keine Möglichkeit, den Videorekorder über das Benutzer-Interface zu steuern, und wird über die fehlerhaften Reaktionen des Benutzer-Interfaces und des Videorekorders erstaunt und möglicherweise auch verärgert sein.

In einer solchen oder ähnlichen Situation kann jedoch auch noch ein weiteres Problem auftreten. So kann die Aufnahme der gewünschten Audioquelle auch dann unbrauchbar sein, wenn die gewünschte Audioquelle sich zwar im Aufnahmegebiet des richtungssensitiven Audioaufnahmesystems befindet, aber die Störungen durch die weiteren Audioquellen, auch wenn sie sich außerhalb des Aufnahmegebietes befinden, zu stark sind. Das tritt z. B. ein, wenn die störenden Audioquellen zu stark sind, sich viel näher an den Mikrofonen befinden als die gewünschte Audioquelle, oder auch wenn das richtungssensitive Audioaufnahmesystem von geringer Güte ist, so dass es keine ausreichende Verbesserung des Signal-zu-Rausch-Abstandes bewirkt. Auch in diesem Fall wird ein Benutzer sich das Fehlverhalten des Systems nicht erklären können.

Aufgabe der Erfindung ist es daher, einen Benutzer eines richtungssensitiven Audioaufnahmesystems in die Lage zu versetzen, dass dieser sich das Verhalten des Systems erklären und nach seinen Wünschen beeinflussen kann.

Die Aufgabe wird gelöst durch ein richtungssensitives Audioaufnahmesystem mit einer Systemkomponente
- zur Anzeigs eines Aufnahmegebietes des Systems und/oder
- zur Anzeigs einer Störquelle.

Indem das richtungssensitive Audioaufnahmesystem mit einer Systemkomponente ausgestattet wird, die einem Benutzer das Aufnahmegebiet des Systems und/oder etwaige Störquellen anzeigt, versorgt es den Benutzer mit der Information, die dieser benötigt, um das Systemverhalten verstehen und nach seinen Wünschen beeinflussen zu können.

Zeigt das System ihm beispielsweise an, dass er sich nicht im Aufnahmegsbiet befindet, so kann er sich z. B. in das vom System angezeigte Aufnahmegsbiet begeben, oder er kann die Aufmerksamkeit des Systems auf sich lenken, so dass das System aus sich sein Aufnahme gebiet auf ihn verschiebt. Um die Aufmerksamkeit des Systems zu erregen, kann der Benutzer je nach Systemausgestaltung z. B. in die Hände klatschen, um die Richtcharakteristik des Audioaufnahmesystems zu nutzen, oder er kann heftig winken, um die Bildverarbeitung eines Videosystems anzusprechen.

Möchte der Benutzer, dass nicht er selbst, sondern eine andere Audioquelle aufgenommen wird, so kann er die Aufmerksamkeit des Audioaufnahmesystems auf diese gewünschte Audioquelle lenken. Dazu kann er sich z. B. zu dieser Audioquelle begeben und kurz in die Hände klatschen, um sich dann wieder unauffällig zu entfernen. Bei entsprechender Systemausstattung genügt aber auch bereits eine hinweisende Handbewegung auf die gewünschte Audioquelle. Diese Handbewegung kann dann von einer Videokamera aufgenommen, über eine Bilderkennung ausgewertet und in eine geeignete Steuerung der Richtcharakteristik des Audioaufnahmesystems umgesetzt werden.

Zeigt das System ihm eine Störquelle, z. B. ein laufendes Radio, an, so kann er die Störung beseitigen, indem er in diesem Beispiel das Radio abschaltet. Er kann aber auch den Signal-zu-Rausch-Abstand bzgl. dieser Störquelle verbessern, indem er lauter spricht oder sich dem Aufnahmesystem nähert. Kann er nicht gegen die Störung ankommen, so bleibt ihm bei geeigneter Systemausgestaltung noch die Möglichkeit auf ein anderes Eingabemedium, z. B. bei der Bedienung eines Videorekorders auf das Drücken entsprechender Tasten zurückzugreifen.

Die Anzeige von Aufnahmegebiet und/oder Störquelle kann gemäß den abhängigen Ansprüchen 2 bis 5 auf unterschiedliche Arten und Weisen erfolgen, die auch miteinander kombinierbar sind. So kann beispielsweise auf einem Display eine textliche und/oder bildliche Bezeichnung eingeblendet werden. Z. B. kann das Wort "Couch", eine skizzierte Darstellung einer Couch und/oder ein Bild der tatsächlich vorhandenen Couch gezeigt werden. Alternativ oder ergänzend dazu kann das Wort "Couch" auch akustisch über einen Lautsprecher ausgegeben werden. Ob es sich bei der Couch um ein Aufnahmegebiet oder den Ort einer Störquelle handelt, kann ebenfalls akustisch angesagt oder bildlich dargestellt werden. Bei Vorhandensein einer Kamera und entsprechender Bilderkennung ist es auch denkbar, dass nicht nur der Ort der Störquelle, sondern die Störquelle selbst bezeichnet wird, z. B. indem über einen Lautsprecher ausgsgsben wird: "Das Radio rechts in der Ecke stört."

Eine weitere Möglichkeit zur Anzeige von Aufnahmegebiet und/oder Störquelle besteht in einer Zeigevorrichtung, also beispielsweise einem pfeilähnlichen Zeiger, dessen Spitze in den Aufnahmestrahl eines linearen Mikrofon-Arrays weist. Durch Ausstatten des Zeigers mit einer alternativ grün oder rot leuchtenden LED lässt sich beispielsweise zwischen Aufnahmegebiet und Störquelle unterscheiden. Zur Anzeige begrenzterer Raumbereiche lassen sich auch mehrere Zeigevorrichtungen kombinieren.

Besonders eindringlich lassen sich solche Zeigevorrichtungen gestalten, wenn man ihnen das Aussehen künstlicher Kreaturen bzw. das von Gliedmaßen solcher künstlichen Kreaturen gibt. So lässt sich z. B. ein künstlicher Arm oder auch ein künstlicher Kopf verwenden. Bei einem künstlichen Kopf kann man durch die Blickrichtung der künstlichen Augen besonders eindrucksvolle Anzeigen erreichen. Statt Teile von künstlichen Kreaturen lassen sich auch komplette künstliche Kreaturen benutzen. So kann sich ein künstlicher Hund vollständig in die anzuzeigende Richtung wenden und durch Bewegen seines Kopfes und die Blickrichtung seiner Augen auch begrenztere Raumbereiche anzeigen. Darüber hinaus lässt sich durch die Auswahl der künstlichen Kreatur auch ein geeigneter psychologischer Eindruck des automatischen Systems beim Benutzer erreichen: dummes/schlaues, unterwürfiges/sachliches System.

Statt eine Zeigevorrichtung physisch auszuführen, besteht auch die Möglichkeit, sie nur auf einem Display bildlich darzustellen. So kann ein Pfeil perspektivisch abgebildet und eine künstliche Kreatur auf einem Bildschirm dargestellt werden. Eine solche bildliche Darstellung besitzt zwar nicht die gleiche Ausdruckskraft wie eine tatsächliche physische Realisation, sie erhöhen jedoch die Flexibilität und Wartbarkeit des Systems und senken die Erstellungs- und Pflegekosten.

Die abhängigen Ansprüche 6 und 7 beziehen sich auf Ausführungsformen eines erfindungsgemäßen richtungssensitiven Audioaufnahmesystems, in dem die Richtcharakteristik mittels eines Richtmikrofons und/oder eines Mikrofon-Arrays erreicht wird

In den unabhängigen Ansprüchen 8, 9 und 10 bezieht sich die Erfindung jedoch auch auf ein Spracherkennungssystem, das seine Audiosignale von einem erfindungsgemäßen Audioaufnahmesystem bezieht, auf ein Steuerungssystem, das ein solches Spracherkennungssystem als Benutzer-Interface verwendet, und auf ein Gerät, das mit einem solchem Steuerungssystem bedient wird. Wie eingangs erwähnt sind insbesondere Spracherkennungssysteme auf hochwertige Audioaufnahmesysteme angewiesen und eignen sich wegen der Natürlichkeit sprachlicher Kommunikation in besonderer Weise als Benutzerschnittstelle für Gerätesteuerungen. In diesem Sinne profitieren Spracherkennungs-, Steuerungssysteme und die mit ihnen gesteuerten Geräte in besonderer Weise von der Erfindung. Insbesondere lassen sich solche Systeme zur Steuerung von Geräten im Heimbereich wie z. B. von Geräten der Unterhaltungselektronik oder von Haushaltsgeräten einsetzen. Gleiches gilt für Geräte im Auto wie Radio oder Navigationssystem, das der Fahrer vielleicht in einem Moment bedienen will, in dem sich die übrigen Autoinsassen unterhalten. Dafür können solche Steuerungssysteme mit Spracherkennung auch in diese Geräte integriert werden.

Diese und weitere Aspekte und Vorteile der Erfindung werden im Folgenden an Hand der Ausführungsbeispiele und insbesondere an Hand der beigefügten Zeichnungen näher erläutert. Es zeigen:
- Fig. 1: eine Ausführungsform des erfindungsgemäßen Steuerungssystems mit einem Spracherkennungssystem mit einem richtungssensitiven Audioaufnahmesystem,
- Fig. 2: zwei Ausführungsformen einer Zeigevorrichtung, und
- Fig. 3a, 3b: zwei Ausführungsformen einer Zeigevorrichtung mit einem "Augenpaar".

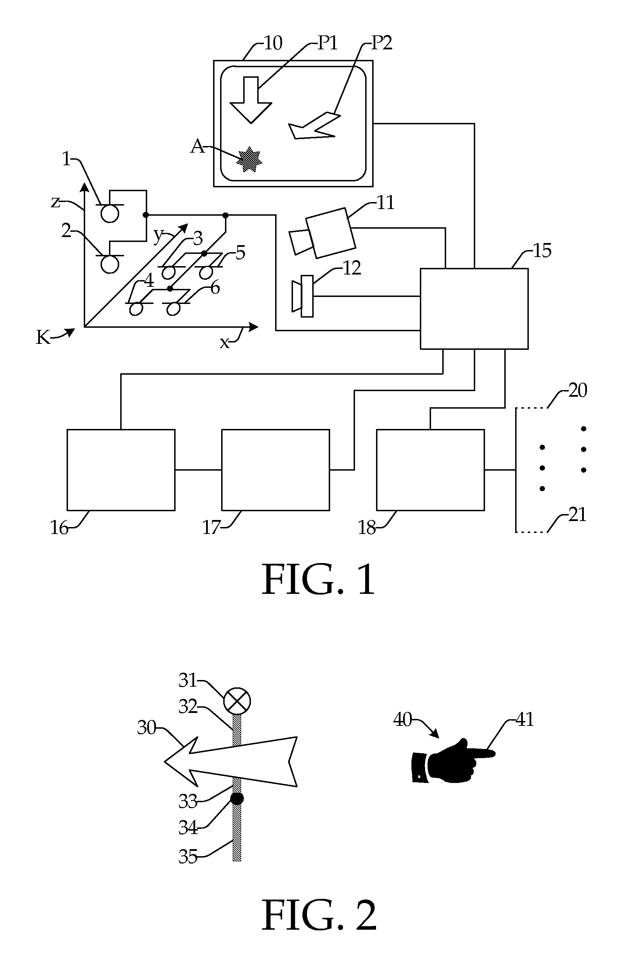

Die Fig. 1 zeigt die schematische Darstellung einer Ausführungsform des erfindungsgemäßen Steuerungssystems mit einem Spracherkennungssystem mit einem richtungssensitiven Audioaufnahmesystem. Um die räumliche Lage der Mikrofone 1 bis 6 des Audioaufnahmesystems anzudeuten, ist in Fig. 1 ein kartesisches Koordinatensystem K mit den orthogonalen Raumachsen x, y und z angedeutet. Die beiden Mikrofone 1 und 2 bilden ein lineares Mikrofon-Array parallel zur Raumrichtung z. Die übrigen Mikrofone 3 bis 6 sind in einem ebenen Mikrofon-Array in der x-y-Ebene angeordnet. Zusammen bilden die Mikrofone 1 bis 6 also ein dreidimensionales Mikrofon-Array.
Die von den Mikrofonen 1 bis 6 aufgenommenen Audiosignale werden einer Kontrollund Verarbeitungseinheit 15 zugeführt, die durch entsprechende Signalverarbeitung das Aufnahmegebiet des Mikrofon-Arrays bestimmt. Dabei versucht die Kontroll- und Verarbeitungseinheit 15 das Aufnahmegebiet derart zu bestimmen, dass sich die gewünschten Audioquellen im Aufnahmegebiet befinden. Um dieses Ziel zu erreichen bedient sie sich zusätzlich einer Videokamera 11, die ebenfalls mit der Kontroll- und Verarbeitungseinheit 15 gekoppelt ist. Neben der Auswertung der von den Mikrofonen 1 bis 6 gelieferten Audiosignale kann die Kontroll- und Verarbeitungseinheit 15 also auch eine Mustererkennung auf den Videosignalen der Videokamera 11 durchführen, um die Position der gewünschten Audioquellen zu bestimmen.

Als Ausgabemedien sind mit der Kontroll- und Verarbeitungseinheit 15 ein Display 10 und ein Lautsprecher 12 verbunden. Über diese Ausgabemedien können dem Benutzer des Systems Rückmeldungen über das Systemverhalten gegeben werden und er kann zu weiteren Eingaben aufgefordert werden. Insbesondere können sie aber auch dazu benutzt werden, um das Aufnahmegebiet des aus den Mikrofonen 1 bis 6 gebildeten Mikrofon-Arrays und/oder die Richtung und/oder die Position von Störquellen anzuzeigen. Dazu kann über das Display 10 bildlich oder über den Lautsprecher 12 akustisch ein Text ausgsgsben werden, der Aufnahmegebiet und/oder Störquelle bezeichnet. Mögliche Texte sind "Aufnahmegebiet: Couch", "Die Aufnahmerichtung ist 20 Grad links vom Gerät", "Das Radio hinten links stört" oder "Störung rechts vom Gerät".

Zusätzlich oder an Stelle eines Textes kann auch eine bildliche Darstellung auf dem Display 10 benutzt werden. So kann eine stilisierte Abbildung einer Couch gezeigt werden, wenn sich dort das Aufnahmegebiet befindet. Es kann jedoch auch ein tatsächliches Bild des Aufnahmegebietes und/oder der Störquelle angezeigt werden, indem das System die Videokamera 11 darauf ausrichtet und ihr Bild auf dem Display 10 wiedergibt. Für einigs dieser Ausgaben, z. B. um den Text "Couch" anzeigen zu können, muss das System das Videosignal der Videokamera 11 einer entsprechenden Bilderkennung zuführen. Besitzt das System diese Fähigkeit nicht, so kann es sich zur Anzeige von Aufnahmegsbiet und/oder Störquelle auf unmittelbare Angaben wie z. B. die Raumrichtung relativ zum Aufnahmegerät beschränken.
Eine weitere Möglichkeit zur Anzeige ist in Fig 1 durch die Darstellung der beiden Zeigepfeile P1 und P2 und des Aufnahmegebietssymbols A auf dem Display 10 angsdeutet. Die Zeigepfeile P1 und P2 werden in perspektivischer Verzerrung auf dem Display 10 dargestellt und vermitteln dem Benutzer beim Betrachten des Displays 10, welche Position ihm das System anzeigen will. Das Aufnahmegebietsymbol A zeigt ihm an, dass sich in dieser Position das Aufnahmegebiet des Systems befindet. Fokussiert das System nur auf eine Aufnahmerichtung statt einer eingeschränkteren Position im Raum so genügt zur Anzeige auch ein einzelner Zeigepfeil, während zur genaueren Anzeige einer Raumposition auch mehr als zwei Pfeile verwendet werden können. Soll statt des Aufnahmegebietes eine Störquelle angäzeigt wird, so wird an Stelle des Aufnahmegebietssymbols A ein Störquellensymbol, z. B. ein stilisierter Blitz, angezeigt.

Die Kontroll- und Verarbeitungseinheit 15 gibt das fokussierte Audiosignal des Mikrofon-Arrays an das Spracherkennungssystem 16 weiter, das dieses in Text überführt und an die Verstehenskomponente 17 weiterreicht. Die Verstehenskomponente 17 extrahiert aus dem natürlich-sprachlichen Text die Bestandteile, die für die Gerätesteuerung relevant sind, also beispielsweise die Bezeichnung des Gerätes, auf das sich der Befehl bezieht, den Befehl und, sofern anwendbar, die Befehlsparameter. Aus dem natürlich-sprachlichen Satz "Schalte den Fernseher auf RTL" extrahiert die Verstehenskomponente 17 also, dass der Fernseher gesteuert werden soll, dass es sich um eine Umschalten des empfangsnen Programms handelt und dass das neue Programm der Sender RTL sein soll.

Das Verstehensergebnis übergibt die Verstehenskomponente 17 wieder zurück an die Kontroll- und Verarbeitungseinheit 15. Diese stellt fest, ob alle Angaben vorliegen, um die vom Benutzer gewünschte Aktion durchführen zu können. Ist dies der Fall, so werden die entsprechenden Befehle an die Geräteschnittstelle 18 weitergegeben, die sie schließlich in gerätespezifische Befehle umsetzt und an das betroffene, an die Geräteschnittstelle 18 über eine der Leitungen 20 ... 21 angsschlossene Gerät weiterreicht. Fehlen aber noch Angaben, so teilt die Kontroll- und Verarbeitungseinheit 15 dies dem Benutzer über das Display 10 und/oder den Lautsprecher 12 mit und fordert ihn zu weiteren Eingaben auf.

Solche Nachfragen kann die Kontroll- und Verarbeitungseinheit 15 außer bei fehlenden und unklaren Angaben auch dann stellen, wenn die Erkennung der Benutzeräußertung nur mit niedriger Zuverlässigkeit behaftet ist, was das Spracherkennungssystem 16 und/oder die Verstehenskomponente 17 z. B. durch Berechnen von Konfidenzmaßen ermitteln können. Ist also im obigen Beispiel der Sendername RTL nur undeutlich verstanden worden, d h. besitzt er nur eine niedrige Zuverlässigkeit, so kann die Kontroll- und Verarbeitungseinheit 15 den Benutzer auffordern, den Sendernamen, auf den gewechselt werden soll, noch einmal zu wiederholen.

In Bezug auf die Erfindung besteht die Aufgabe der Kontroll- und Verarbeitungseinheit 15 insbesondere darin, den Benutzer als gewünschte Audioquelle im Aufnahmegsbiet des aus den Mikrofonen 1 bis 6 gebildeten Mikrofon-Arrays zu halten und eventuelle Störquellen zu detektieren. Nimmt also beispielsweise die Erkennungsleistung ab, was das System dadurch bemerkt, dass die Konfidenzmaße des Verstandenen abnehmen und/oder häufigere Rückfragen an den Benutzer und Korrekturen durch den Benutzer erfolgen, so kann es den Benutzer auf diese Tatsache aufmerksam machen und ihm das Aufnahmegebiet des Systems anzeigen. Weiter kann es mit Hilfe des Mikrofon-Arrays und/oder der Kamera 11 den Raum nach Störquellen absuchen, um diese dann ebenfalls dem Benutzer anzuzeigen. Der Benutzer kann dann entsprechende Gegenmaßnahmen treffen. So kann er sich wieder in das Aufnahmegebiet begeben oder das Aufnahmegebiet auf sich ziehen, indem er in die Hände klatscht, um die Aufmerksamkeit des Systems auf sich zu lenken. Auch kann er die Störquellen abstellen.

Statt dem Benutzer Aufnahmegebiet und Störquellen nur bei niedriger Zuverlässigkeit der Erkennungsergebnisse anzuzeigen, kann das System dies auch ständig oder auch nur in periodischen Abständen tun. Darüber hinaus können die Richtcharakteristik des Mikrofon-Arrays und/oder die von der Kamera 11 gelieferten Videosignale zur Verfolgung des Benutzers und Fokussierung auf ihn verwendet werden. Bei entsprechender Ausstattung können dazu auch die Mikrofone 1 bis 6 des Mikrofon-Arrays und/oder die Kamera 11 durch geeignete Änderung ihrer Positionen und Ausrichtungen dem Benutzer nachgeführt werden.

Fig. 2 zeigt zwei weitere Ausführungsformen einer Zeigevorrichtung. Zur Anzeige der Richtung auf Aufnahmegebiet und/oder Störquelle kann das System einen Pfeil 30 verwenden, der über eine Stange 33 und ein Kugelgslenk 34 in alle Richtungen drehbar auf einem Fuß 35 gelagert ist. Über eine weitere Stange 32 kann man noch eine Lampe oder Leuchtelektrode 31 an dem Pfeil 30 anbringen. Über die Farbe und/oder das Leuchtmuster dieser Lampe 31 kann dann angezeigt werden, ob die Zeigevorrichtung aktiv ist und ob sie das Aufnahmegebiet oder eine Störquelle anzeigt. Z. B. kann die ausgeschaltete Lampe 31 anzeigen, dass die Zeigevorrichtung außer Betrieb ist, grüne Farbe kann anzeigen, dass auf das Aufnahmegebiet gezeigt wird, und rote Farbe, dass eine Störquelle angezeigt wird. Statt des Pfeils 30 kann auch jede andere Form mit einer vom Benutzer gut wahrnehmbaren Zeigerichtung verwendet werden. Als Beispiel ist in Fig. 2 noch eine Hand 40 mit ausgestrecktem Zeigefinger 41, der die Richtung angibt, angedeutet.

Soll nicht nur eine Richtung, sondern ein eingeschränkterer Raumbereich angezeigt werden, so lassen sich wieder mehrere solcher Pfeile 30 oder dergleichen kombinieren. Statt einer mechanischen Ausführung der Pfeile 30 besteht auch wie in Fig 1 gezeigt die Möglichkeit, diese Zeiger nur auf einem Display 10 perspektivisch darzustellen.

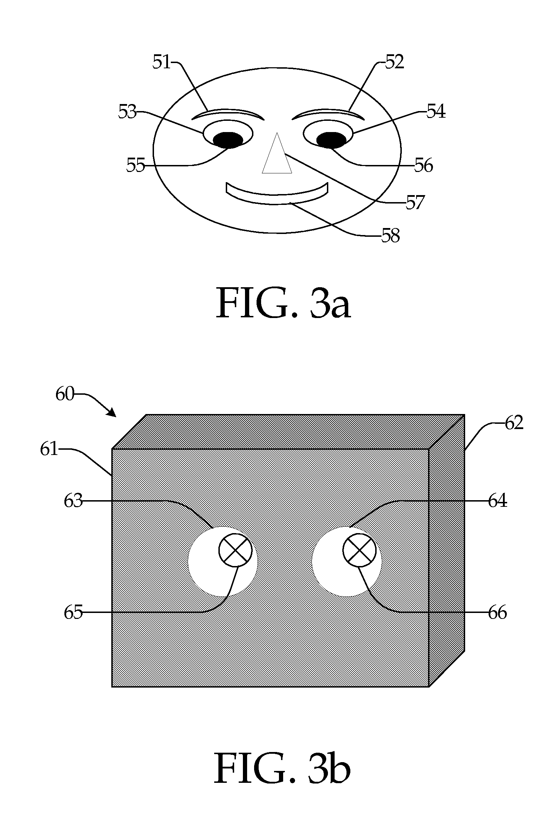

Die Fig 3a und 3b zeigen zwei weitere Ausführungsformen einer Zeigevorrichtung, die beide über eine Art Augenpaar verfügen. In Fig 3a ist der einem menschlichen Kopf nachgebildete Kopf einer künstlichen Kreatur dargestellt, der über zwei Augenbrauen 51 und 52, zwei Augen 53 und 54 mit je einer Pupille 55 und 56, eine Nase 57 und einen Mund 58 verfügt. Durch eine geeignete Formgebung der Augen 53 und 54 und insbesondere der Pupillen 55 und 56 lässt sich für einen Betrachter der Eindruck herstellen, dass die künstliche Kreatur in ein bestimmtes Raumgebiet "blickt".

Ob es sich bei diesem Raumgebiet um das Aufnahmegebiet des Systems oder um eine Störquelle handelt, lässt sich durch die Form des Mundes 58 und/oder die der Augenbrauen 51, 52 und/oder auch die der Nase 57 andeuten. Der in Fig 3a gezeigte Gesichtsausdruck bezeichnet beispielsweise, dass die künstliche Kreatur das Aufnahmegebiet anblickt. Abgesenkte Mundwinkel, hochgezogene Augenbrauen 51, 52 oder eine kraus gezogene Nase 57 könnten dagegen auf eine Störquelle hinweisen. Inaktivität des Systems ließe sich durch einen abwesenden Blick in die Ferne andeuten, oder aber man könnte die Augen 53, 54 noch mit in der Fig. 3a nicht gezeigten Augenlidern versehen, die dann geschlossen würden.

Fig. 3b führt ein "Augenpaar" 63, 64 mit "Pupillen" 65, 66 in einfacher Weise aus. In die Vorderwand 61 eines Kastens 60 werden zwei Löcher 63 und 64 geschnitten. Steht man senkrecht oder nahezu senkrecht vor der Vorderwand 61, so kann man durch die Löcher 63, 64 zwei an der Rückwand 62 des Kastens 60 in seinem Inneren angebrachte Lampen oder LEDs 65, 66 erkennen. Kann der Benutzer diese LEDs 65, 66 im Zentrum der Löcher 63, 64 sehen, so befindet er sich exakt in der "Blickrichtung" des Systems. Wandern die LEDs 65, 66 aus dem Zentrum der Löcher 63, 64 heraus, so verlässt er die Blickrichtung Ob es sich bei der Blickrichtung um die Aufnahmerichtung oder um die Richtung zu einer Störquelle handelt, lässt sich z. B. wieder durch die Farbgebung der LEDs 65, 66 unterscheiden, beispielsweise grün für die Aufnahmerichtung und rot für eine Störquelle. Inaktivität des Systems kann z. B. durch Ausschalten der LEDs 65, 66 gekennzeichnet werden.

## Patentansprüche

1. Richtungssensitives Audioaufnahmesystem mit einer Systemkomponente
- zur Anzeige eines Aufnahmegebietes des Systems und/oder
- zur Anzeige einer Störquelle.

2. Richtungssensitives Audioaufnahmesystem nach Anspruch 1,
**dadurch gekennzeichnet,**
**dass** die Anzeige das Aufnahmegebietes und/oder der Störquelle durch akustische und/oder textliche und/oder bildliche Bezeichnung des Aufnahmegebietes und/oder der Störquelle erfolgt.

3. Richtungssensitives Audioaufnahmesystem nach Anspruch 1,
**dadurch gekennzeichnet,**
**dass** die Systemkomponente zur Anzeige des Aufnahmegebietes und/oder der Störquelle aus einer Zeigevorrichtung besteht, die dazu vorgesehen ist, das Aufnahmegebiet und/oder die Störquelle durch Hindeuten anzuzeigen.

4. Richtungssensitives Audioaufnahmesystem nach Anspruch 1,
**dadurch gekennzeichnet,**
**dass** die Systemkomponente zur Anzeige des Aufnahmegebietes und/oder der Störquelle aus einer künstlichen Kreatur oder aus einem Teil einer künstlichen Kreatur besteht, die dazu vorgesehen sind, das Aufnahmegebiet und/oder die Störquelle durch Hindeuten und/oder Hinblicken anzuzeigen.

5. Richtungssensitives Audioaufnahmesystem nach Anspruch 1,
**dadurch gekennzeichnet,**
**dass** die Anzeige des Aufnahmegsbietes und/oder der Störquelle durch die bildliche Darstellung einer Zeigevorrichtung nach Anspruch 3 oder einer künstlichen Kreatur oder eines Teiles einer künstlichen Kreatur nach Anspruch 4 erfolgt.

6. Richtungssensitives Audioaufnahmesystem nach Anspruch 1,
**dadurch gekennzeichnet,**
**dass** zum Audioaufnahmesystem zur Erreichung von Richtungssensitivität ein Richtmikrofon gehört.

7. Richtungssensitives Audioaufnahmesystem nach Anspruch 1,
**dadurch gekennzeichnet,**
**dass** zum Audioaufnahmesystem zur Erreichung von Richtungssensitivität ein Mikrofon-Array (1 bis 6) gehört.

8. Spracherkennungssystem mit einem richtungssensitiven Audioaufnahmesystem mit einer Systemkomponente
- zur Anzeige eines Aufnahmegsbietes des Systems und/oder
- zur Anzeigs einer Störquelle.

9. Steuerungssystem mit einem Spracherkennungssystem mit einem richtungssensitiven Audioaufnahmesystem mit einer Systemkomponente
- zur Anzeige eines Aufnahmegebietes des Systems und/oder
- zur Anzeige einer Störquelle.

10. Gerät, insbesondere im Heimbereich oder im Auto, mit einem Steuerungssystem mit einem Spracherkennungssystem mit einem richtungssensitiven Audioaufnahmesystem mit einer Systemkomponente
- zur Anzeige eines Aufnahmegsbietes des Systems und/oder
zur Anzeige einer Störquelle.
